# EUROPÄISCHE PATENTANMELDUNG

(11) **EP 4 744 467 A1**
(43) Veröffentlichungstag der Anmeldung: **20.05.2026**
(21) Anmeldenummer: 24213049.0
(22) Anmeldetag: 14.11.2024
(51) Int. Cl.: A01B 63/111, G01N 29/04, G01N 33/24, A01B 19/10

(54) **VERFAHREN ZUR BODENBEARBEITUNG SOWIE ZUM KALIBRIEREN EINER VIBROAKUSTISCHEN BODENFEUCHTE-MESSVORRICHTUNG**

(71) Anmelder: Universität Kassel, 34125 Kassel (DE)
(72) Erfinder: Siebald, Hubertus, 37213 Witzenhausen (DE); Hensel, Oliver, 37215 Witzenhausen (DE); Kaufmann, Hans-Hermann, 37215 Witzenhausen (DE); Bilibio, Carolina, 37215 Witzenhausen (DE)
(74) Vertreter: Schneider, Peter Christian

(57) **Zusammenfassung**

Die Erfindung bezieht sich auf ein Verfahren zur Bodenbearbeitung, im Rahmen dessen der Boden (30) einer zu bearbeitenden Fläche mittels eines verstellbar an einem Trägerfahrzeug (15) montierten Bodenbearbeitungsgerätes (10), welches ein den Boden (30) während der Bearbeitung durchschneidendes Bodenbearbeitungselement (18) aufweist, bearbeitet wird,
wobei das Bodenbearbeitungselement (18) schwingungsübertragend mit einem Vibrationssensor (20) gekoppelt ist, welcher Schwingungen des Bodenbearbeitungselementes (18) während der Bearbeitung misst und entsprechende Vibrationsmesswerte an eine Steuereinheit (24) übergibt,
und wobei die Steuereinheit (24) in Abhängigkeit von den Vibrationsmesswerten einen Aktor (28) zur Verstellung des Bodenbearbeitungsgerätes (10) ansteuert,

Die Erfindung zeichnet sich dadurch aus, dass die Ansteuerung des Aktors (28) in lediglich indirekter Abhängigkeit von den Vibrationsmesswerten erfolgt, indem diese zunächst gemäß einer in der Steuereinheit (24) hinterlegten Umrechnungsregel in berechnete Bodenfeuchtewerte umgerechnet werden und die Steuereinheit (24) sodann den Aktor (28) in direkter Abhängigkeit von den berechneten Bodenfeuchtewerten ansteuert.

## Beschreibung

### Gebiet der Erfindung

Die Erfindung betrifft ein Verfahren zur Bodenbearbeitung, im Rahmen dessen der Boden einer zu bearbeitenden Fläche mittels eines verstellbar an einem Trägerfahrzeug montierten Bodenbearbeitungsgerätes, welches ein den Boden während der Bearbeitung durchschneidendes Bodenbearbeitungselement aufweist, bearbeitet wird, wobei das Bodenbearbeitungselement schwingungsübertragend mit einem Vibrationssensor gekoppelt ist, welcher Schwingungen des Bodenbearbeitungselementes während der Bearbeitung misst und entsprechende Vibrationsmesswerte an eine Steuereinheit übergibt, und wobei die Steuereinheit in Abhängigkeit von den Vibrationsmesswerten einen Aktor zur Verstellung des Bodenbearbeitungsgerätes ansteuert.

Die Erfindung bezieht sich weiter auf ein Verfahren zum Kalibrieren einer vibroakustischen Bodenfeuchte-Messvorrichtung.

### Stand der Technik

Ein gattungsgemäßes Bodenbearbeitungsverfahren ist bekannt aus der DE 10 2021 113 231 A1.

Die landwirtschaftliche Bodenbearbeitung umfasst eine Vielzahl unterschiedlicher Bearbeitungsmethoden und -zwecke. Rein beispielhaft seien hier die Saatbettbereitung, das Drillen und die mechanische Unkrautbekämpfung genannt. In allen Fällen wird ein spezifisches Bodenbearbeitungsgerät an einem Trägerfahrzeug, meist ein universell einsetzbarer Traktor, montiert und mittels des Trägerfahrzeugs über eine zu bearbeitende Fläche gezogen. Dabei durchschneiden einzelne Bodenbearbeitungselemente den Boden. Bei den Bodenbearbeitungselementen kann es sich um solche handeln, die für die spezielle Bodenbearbeitung ohnehin benötigt werden, wie beispielsweise Pflugscharen oder Grubberzinken. Es kann sich jedoch auch um speziell für Messzwecke installierte Elemente handeln, wie beispielsweise einen in den Boden ragenden Messzinken, der bei der Bewegung des Bodenbearbeitungsgerätes durch den Boden gezogen wird.

Aus der eingangs bereits genannten, gattungsbildenden DE 10 2021 113 231 A1 ist ein mechanisches Unkrautbekämpfungsgerät bekannt, welches zur eigentlichen Unkrautbekämpfung an Federzinken montierte Klingen aufweist, die bei der Überfahrt über die zu bearbeitende Fläche den Boden in vorgegebener Tiefe durchschneiden. Zur Höhenverstellung ist ein hydraulischer Aktor vorgesehen, mittels dessen sich eine Tragstruktur, an welcher die Zinken fixiert sind, relativ zu einer festen Ankopplungsstelle am Trägerfahrzeug verstellen lässt. Das bekannte Bodenbearbeitungsgerät ist mit einer Erfassungseinrichtung ausgestattet, die eine Vielzahl von Sensoren umfasst, darunter ein Vibrationssensor, mittels dessen Schwingungen eines der Zinken erfasst werden können. Die erfassten Messwerte werden an eine Steuereinheit übergeben, die ihrerseits den Aktor und damit die Bearbeitungstiefe des Bodens so regelt, dass sich die erfassten Messwerte in vorgegebenen Toleranzintervallen bewegen. Insbesondere in Bezug auf die Schwingungen der Bodenbearbeitungselemente gibt die Druckschrift die klare Zielsetzung einer Schwingungsminimierung vor. Die Druckschrift weist auf den Zusammenhang zwischen Bodenkennwerten und Messwerten der diversen Sensoren der Erfassungseinrichtung hin. Als Beispiele für derartige Bodenkennwerte werden die Bodenfeuchte und die Bodenscherfestigkeit genannt.

Aus der DE 103 06 332 A1 ist es bekannt, zur Prüfung der Befahrbarkeit einer zu bearbeitenden Fläche durch das Trägerfahrzeug, die lokale Bodenfeuchte durch einen elektrischen Leitfähigkeitssensor zu ermitteln, welcher in Form einer den Boden durchschneidenden, zinkenartigen Elektrode als besonderes Bodenbearbeitungselement am Bodenbearbeitungsgerät vorgesehen ist. Zugleich werden mittels eines Mikrofons akustische Schwingungen besagter Elektrode erfasst, um daraus Rückschlüsse auf die Korngrößenzusammensetzung und den organischen Anteil des Bodens ziehen zu können.

In der DE 10 2020 110 758 A1 wird der allgemeine Ansatz diskutiert, ein Bodenbearbeitungsgerät, insbesondere eine Verteilmaschine zur Verteilung von landwirtschaftlichem Verteilgut, in Abhängigkeit u. a. von den lokalen Bodenbedingungen anzusteuern. Als eine dieser relevanten Bodenbedingungen nennt die Druckschrift die relative Bodenfeuchte. Sie enthält jedoch keine Lehre zur Messung besagter Bodenfeuchte.

Gemeinsam ist den bekannten Ansätzen der grundsätzliche Wunsch, die konkreten Parameter einer Bodenbearbeitung möglichst präzise an die lokalen Bodengegebenheiten anzupassen. Es hat sich nämlich gezeigt, dass die Erträge einer Fläche umso höher ausfallen, je präziser die Abstimmung der Bodenbearbeitungsparameter auf die tatsächlichen Bodenbegebenheiten erfolgt. Gemeinsam ist den genannten Druckschriften auch die grundsätzliche Erkenntnis, dass die Bodenfeuchte einen wichtigen Aspekt besagter Bodenbegebenheiten darstellt. Keine der genannten Druckschriften liefert jedoch eine konkrete Lehre zur Umsetzung besagter Wünsche bzw. Erkenntnisse.

### Aufgabenstellung

Es ist die Aufgabe der vorliegenden Erfindung, eine konkrete technische Lehre zur praktischen Umsetzung der o. g. Wünsche bzw. Erkenntnisse zur Verfügung zu stellen.

### Darlegung der Erfindung

Diese Aufgabe wird in Verbindung mit den Merkmalen des Oberbegriffs von Anspruch 1 dadurch gelöst, dass die Ansteuerung des Aktors in lediglich indirekter Abhängigkeit von den Vibrationsmesswerten erfolgt, indem diese zunächst gemäß einer in der Steuereinheit hinterlegten Umrechnungsregel in berechnete Bodenfeuchtewerte umgerechnet werden und die Steuereinheit sodann den Aktor in direkter Abhängigkeit von den berechneten Bodenfeuchtewerten ansteuert.

Die Aufgabe wird weiter durch ein Verfahren gemäß Anspruch 3 gelöst, welches ein eigenständiges Verfahren zum Kalibrieren einer vibroakustischen Bodenfeuchte-Messvorrichtung darstellt, sich jedoch auch als vorteilhafter Bestandteil des vorgenannten Bodenbearbeitungsverfahrens anbietet. Bei besagtem Kalibrierverfahren handelt es sich um ein Verfahren zum Kalibrieren einer vibroakustischen Bodenfeuchte-Messvorrichtung, welche
- eine Steuereinheit,
- einen Vibrationssensor und
- ein schwingungsübertragend mit dem Vibrationssensor gekoppeltes Bodenbearbeitungselement eines verstellbar an einem Trägerfahrzeug montierten Bodenbearbeitungsgerätes
aufweist,
umfassend die Schritte:
a) Auswählen eines Teilbereichs einer zu bearbeitenden Fläche als Kalibrierstrecke,
b) Ermitteln einer Mehrzahl von Bodenfeuchtemesswerten als Kalibriermesswerte an vorbestimmten Kalibrierpunkten der Kalibrierstrecke,
c) bodenbearbeitendes Überfahren der Kalibrierstrecke mit dem Trägerfahrzeug, wobei das Bodenbearbeitungselement den Boden durchschneidet und der Vibrationssensor Schwingungen des Bodenbearbeitungselementes misst und entsprechende Vibrationsmesswerte ermittelt
   und wobei bei jedem Passieren eines der Kalibrierpunkte der zugeordnete Kalibriermesswert dem jeweils aktuellen Vibrationsmesswert zur Bildung eines Bodenfeuchte-Vibrations-Messwertpaares zugeordnet wird,
d) Berechnen, auf Basis der Bodenfeuchte-Vibrations-Messwertpaare, einer Regel zur Umrechnung von Vibrationsmesswerten in berechnete Bodenfeuchtewerte und Hinterlegen der berechneten Regel als Umrechnungsregel in der Steuereinheit.

Die Grundidee der Erfindung besteht darin, die einzeln durchaus bekannten Erkenntnisse, nämlich einerseits, dass die Bodenfeuchte eine für die Bodenbearbeitung besonders wichtige Bodeneigenschaft darstellt, und andererseits, dass die Bodenfeuchte die Vibrationseigenschaften des Bodenbearbeitungsgerätes "irgendwie" beeinflusst, dadurch zusammenzuführen, dass aus aktuellen, während der Bodenbearbeitung erfassten Vibrationsmesswerten konkrete, lokale Bodenfeuchtewerte berechnet werden, sodass der Aktor für die Einstellung des Bodenbearbeitungsgerätes explizit in Abhängigkeit von der Bodenfeuchte angesteuert werden kann, wie dies im Stand der Technik bislang nur als Wunschvorstellung formuliert war.

Die Steuereinheit kann als speziell ausgestalteter und programmierter Mikro-Controller ausgebildet sein, der beispielsweise am Bodenbearbeitungsgerät mitgeführt wird und über geeignete Schnittstellen zum Vibrationssensor und zum Aktor verfügt. Alternativ kann auch ein universell einsetzbarer Computer, beispielsweise ein Laptop oder Tablet, das beispielsweise auf dem Trägerfahrzeug mitgeführt wird, eingesetzt werden, sofern die entsprechenden Schnittstellen zur Verfügung gestellt werden. Weiter alternativ und bevorzugt ist es möglich, ein in der Regel in modernen Traktoren ohnehin vorhandenes Steuergerät oder den Bordcomputer als Steuereinheit zu nutzen. Bei modernen Traktoren ist es heute Standard, dass die Ansteuerung einer Hydraulik, mit der beliebige Anbaugeräte, insbesondere auch Bodenbearbeitungs-Anbaugeräte, verstellt werden könnten, mittels eines solchen Steuergerätes erfolgt. Typischerweise sind auch geeignete Schnittstellen, beispielsweise eine standardisierte ISOBUS-Schnittstelle vorhanden, über welche der Vibrationssensor angeschlossen werden kann. Weiter weisen moderne Traktoren auch drahtlose Kommunikationspfade auf, über die zusätzliche Daten, auf die weiter unten noch näher eingegangen werden soll, in den als Steuereinheit dienenden Bordcomputer eingelesen werden können. Außerdem können auch die bei modernen Traktoren standardmäßig vorhandenen Mensch-Maschine-Schnittstellen, beispielsweise ein Touchscreen, zur Dateneingabe genutzt werden.

Die Qualität des Verfahrensergebnisses, d. h. die Präzision, mit welcher letztendlich die Ansteuerung des Bodenbearbeitungsgerätes in Abhängigkeit von der lokalen Bodenfeuchte erfolgt, hängt von der Korrektheit der Kalibrierung der vibroakustischen Bodenfeuchte-Messvorrichtung ab, welche sich aus dem Vibrationssensor, dem schwingungsübertragend mit diesem gekoppelten Bodenbearbeitungselement und der Steuereinheit zusammensetzt. Grundsätzlich denkbar ist es, eine solche Kalibrierung statisch vorzunehmen. Dies kann auf rein theoretischem Wege erfolgen oder auf Basis von Kalibriermessungen, die im Vorfeld der eigentlichen Anwendung des erfindungsgemäßen Bodenbearbeitungsverfahrens durchgeführt werden. In jedem Fall resultiert eine Umrechnungsregel, die eine Umrechnung der gemessenen Vibrationsmesswerte in berechnete Bodenfeuchtewerte ermöglicht. Im Kontext der tatsächlichen Bodenbearbeitung bedarf es dann noch eines weiteren Schrittes, der die für den jeweils aktuellen Bearbeitungsort ermittelte, lokale Bodenfeuchte in eine entsprechende Ansteuerung des Aktors "umrechnet". Dieser Schritt kann beispielsweise und bevorzugt durch eine Regelung erfolgen, im Rahmen welcher der Aktor stets so angesteuert wird, dass die Bodenbearbeitungstiefe der gemessenen derart nachgeführt wird, dass eine bestimmte Geräte-Boden-Wechselwirkung, beispielsweise die Ablage eines Saatkorns, stets in einem Bodenbereich mit definierter Bodenfeuchte erfolgt. Hierdurch können beispielsweise im Kontext von Drillmaschinen die optimalen Startbedingungen für das Saatgut unabhängig von lokalen Bodenfeuchteschwankungen auf einem Feld, die sich beispielsweise aus der Profilierung des Feldes ergeben, gewährleistet werden. Analoges gilt für andere Bodenbearbeitungsgeräte, wie beispielsweise Pflüge, Grubber, Eggen oder Geräte zur mechanischen Beikraut- bzw. Unkrautregulierung.

Bevorzugt ist jedoch vorgesehen, dass die Kalibrierung "vor Ort" erfolgt. Hierzu kann das oben bereits geschilderte Kablibrierverfahren Einsatz finden. Im Kontext des erfindungsgemäßen Bodenbearbeitungsverfahrens bedeutet dies, dass die Umrechnungsregel mittels eines Kalibrierverfahrens erstellt wird, welches die folgenden Schritte umfasst:
a) Auswählen eines Teilbereichs der zu bearbeitenden Fläche als Kalibrierstrecke,
b) Ermitteln einer Mehrzahl von Bodenfeuchtemesswerten als Kalibriermesswerte an vorbestimmten Kalibrierpunkten der Kalibrierstrecke,
c) bodenbearbeitendes Überfahren der Kalibrierstrecke mit dem Trägerfahrzeug, wobei das Bodenbearbeitungselement den Boden durchschneidet und der Vibrationssensor Schwingungen des Bodenbearbeitungselementes misst und entsprechende Vibrationsmesswerte ermittelt
   und wobei bei jedem Passieren eines der Kalibrierpunkte der zugeordnete Kalibriermesswert dem jeweils aktuellen Vibrationsmesswert zur Bildung eines Bodenfeuchte-Vibrations-Messwertpaares zugeordnet wird,
d) Berechnen, auf Basis der Bodenfeuchte-Vibrations-Messwertpaare, einer Regel zur Umrechnung von Vibrationsmesswerten in berechnete Bodenfeuchtewerte und Hinterlegen der berechneten Regel als besagte Umrechnungsregel in der Steuereinheit.

Als Kalibrierstrecke wird also ein Teil des ohnehin zu bearbeitenden Feldes gewählt, und während der Kalibrierung wird besagter Teil auch bereits bearbeitet. Die Kalibrierung führt also zu keinem wesentlichen Zeitverlust. Ein solcher entsteht lediglich dadurch, dass an mehreren Stellen der Kalibrierstrecke, d. h. an mehreren Kalibrierpunkten, zur Erstellung von Referenzwerten unabhängige Messungen der lokalen Bodenfeuchte vorgenommen werden müssen. "Unabhängig" bedeutet in diesem Zusammenhang, dass die Referenz-Bodenfeuchtemesswerte, mithin die Kalibriermesswerte, mittels einer von der erfindungsgemäßen vibroakustischen Bodenfeuchte-Messvorrichtung unabhängigen Messung ermittelt werden. Dem Fachmann sind hierzu unterschiedliche, zuverlässige Methoden bekannt. Rein bespielhaft sei die sogenannte volumetrische Bodenfeuchtebestimmung genannt. Im Rahmen des erfindungsgemäßen Kalibrierverfahrens überfährt das Bodenbearbeitungsgerät in bodenbearbeitender Weise die Kalibrierstrecke und insbesondere die Kalibrierpunkte, für welche die lokale Bodenfeuchte explizit bekannt ist. Während der Überfahrt werden die Vibrationen des Bodenbearbeitungselementes mittels des Vibrationsmessers gemessen. Jedes Mal, wenn das Bodenbearbeitungsgerät und insbesondere das Bodenbearbeitungselement einen Kalibrierpunkt passiert, wird ein Wertepaar aus dem aktuellen Vibrationsmesswert und dem Referenz-Bodenfeuchtewert, d. h. dem Kalibrierwesswert, erstellt. Nach Überfahrt der gesamten Kalibrierstrecke ergibt sich also eine der Anzahl von Kalibrierpunkten entsprechende Mehrzahl von Bodenfeuchte-Vibrations-Messwertpaaren. Diese Reihe von Messwertpaaren kann dann als Basis für die Berechnung einer standortspezifischen Umrechnungsregel zwischen Vibrationsmesswerten und berechneten Bodenfeuchtewerten genutzt werden.

Die Erstellung einer Umrechnungsregel kann durch einfache Extra- und Interpolationstechniken erfolgen. Kompliziertere Ansätze, wie beispielsweise Polynomial-Fits, können ebenso Einsatz finden. Alternativ oder zusätzlich zu solchen deterministischen Ansätzen können auch Ansätze aus dem Bereich der künstlichen Intelligenz genutzt werden. Welche konkreten Messwerte hier als "Vibrationsmesswerte" genutzt werden, kann fallweise unterschiedlich sein. Grundsätzlich eignen sich sämtliche Vibrationsparameter, wie beispielsweise Frequenzen, Amplituden, Beschleunigungen oder höhere Ableitungen der Vibrationsbewegung des Bodenbearbeitungselementes, und zwar einzelnen oder in Kombination, wobei das konkrete Messprinzip des Sensors, sei es ein taktiles oder ein berührungsloses Messprinzip, im Kontext der vorliegenden Erfindung keine Rolle spielt. Denkbar und sogar bevorzugt ist zudem als "Vibrationsmesswert" eine Zusammenfassung mehrerer zeitlich nacheinander aufgenommener Einzel-Messwerte zu verwenden. Beispielsweise können laufende Mittelwerte über bestimmte, mitwandernde Zeitfenster oder andere Arten einer mathematischen Zusammenfassung von Einzelwerten genutzt werden.

Bei einer Variante des erfindungsgemäßen Kalibrierverfahrens ist vorgesehen, dass Schritt b vor Schritt c durchgeführt und die in Schritt b ermittelten Kalibriermesswerte bis zur Durchführung von Schritt c gespeichert werden. Insbesondere in Fällen, in denen die Aufnahme der Kalibriermesswerte mit deutlichem Vorlauf zur eigentlichen Bodenbearbeitung erfolgt, können die Kalibriermesswerte händisch in die Steuereinheit eingegeben werden. Bevorzugt erfolgt jedoch ein automatisches Einlesen, insbesondere über eine drahtlose Kommunikationsschnittstelle. Insbesondere ist bevorzugt vorgesehen, dass jeder Kalibriermesswert in einem Datenspeicher am zugeordneten Kalibrierpunkt gespeichert und zum Zeitpunkt des Passierens des jeweiligen Kalibrierpunktes im Rahmen von Schritt c drahtlos an die Steuereinheit kommuniziert wird. So können beispielsweise Bodenfeuchte-Sensoren auf der Kalibrierstrecke ausgebracht werden, die jeweils mit einer Drahtlos-Sendeeinheit ausgestattet sind. Diese wird zum Zeitpunkt des Passierens des jeweiligen Sensors bzw. Kalibrierpunktes getriggert, den gespeicherten Kalibriermesswert an die Steuereinheit zu senden, die mit einem korrespondierenden Drahtlos-Empfänger ausgestattet ist. Die gesendeten Kalibriermesswerte werden dann zusammen mit den jeweils zeitgleich aufgenommenen Vibrationsmesswerten zu den vorgenannten Bodenfeuchte-Vibrations-Messwertpaaren zusammengestellt.

Nachteilig beim vorgenannten Ansatz einer Vorab-Erfassung der Kablibriermesswerte ist, dass sich die Bodenverhältnisse zwischen dem Zeitpunkt der Kalibriermesswerterfassung und der eigentlichen Bodenbearbeitung aufgrund von Niederschlag oder Verdunstung ändern können. Es ist daher vorteilhaft, die Zeitspanne zwischen den Schritten b und c möglichst zu minimieren. Bei einer besonders vorteilhaften Ausführungsform des erfindungsgemäßen Verfahrens ist daher vorgesehen, dass die Schritte b und c gleichzeitig durchgeführt werden, wobei jeder zum Zeitpunkt des Passierens eines der Kalibrierpunkte dort ermittelte Kablibriermesswert drahtlos an die Steuereinheit kommuniziert wird. Auch bei dieser Variante werden also Bodenfeuchte-Sensoren über die Kalibrierstrecke verteilt. Allerdings führen sie ihre Messungen kontinuierlich oder periodisch durch und übermitteln zum Zeitpunkt des Passierens des jeweiligen Kalibrierpunktes ihren aktuellen Bodenfeuchte-Messwert als Kablibriermesswert an die Steuereinheit. Es resultieren also Bodenfeuchte-Vibrations-Messwertpaare aus zeitgleich aufgenommenen Bodenfeuchte- und Vibrationsmesswerten. Dies garantiert eine maximal aktuelle Kalibrierung der vibroakustischen Bodenfeuchte-Messvorrichtung. Ähnlich wie oben für die Vibrationsmesswerte beschrieben, kann es sich auch bei diesen "Bodenfeuchtemesswerten" um Zusammenfassung mehrerer zeitlich nacheinander aufgenommener Einzel-Messwerte handeln.

Außer der zeitlichen Nähe der Aufnahme von Bodenfeuchtemesswerten und Vibrationsmesswerten ist im Rahmen der Kalibrierung auch eine möglichst große räumliche Nähe der Aufnahmeorte besagter Messwerte von Bedeutung für die Qualität der Kalibrierung. Theoretisch sollte die Aufnahme beider Messwerte optimaler Weise am selben Ort erfolgen. Dies ist jedoch praktisch unmöglich, da das mit dem Vibrationssensor gekoppelte Bodenbearbeitungselement und der zur Aufnahme eines Kablibriermesswertes genutzte, stationäre Bodenfeuchtesensor nicht zeitgleich am selben Ort sein können. Bevorzugt erfolgt die Aufnahme daher in einem definierten Abstand, der möglichst nicht viel größer ist, als unbedingt erforderlich, um eine kollisionsfreie Passage des Bodenbearbeitungselementes am stationären Bodenfeuchtesensor zu gewährleisten. Als Zeitpunkt des Passierens wird hier der Zeitpunkt des Erreichens besagten definierten Abstandes zwischen Kalibrierpunkt und Bodenbearbeitungselement während der Überfahrt der Kablibrierstrecke verstanden. Dieser Zeitpunkt wird bevorzugt durch Wechselwirkung eines am Trägerfahrzeug vorhandenen ersten Näherungssensorelementes einer Näherungssensoranordnung mit an den Kalibrierpunkten vorhandenen zweiten Näherungssensorelementen derselben Näherungssensoranordnung ermittelt. Eine derartige Näherungssensoranordnung kann unterschiedliche Ausprägungen haben.

Bei einer ersten Variante ist vorgesehen, dass die Näherungssensorelemente als mechanisch miteinander wechselwirkende, mechanische Fühler ausgebildet sind. Derartige Fühler können mit elektrischen Schaltern verbunden sein, die ein entsprechendes Triggersignal an die Steuereinheit liefern. Alternativ und tatsächlich bevorzugt sind die Näherungssensorelemente jedoch als berührungslos miteinander wechselwirkende Fühler, insbesondere als elektrisch, magnetisch und/oder optisch miteinander wechselwirkende elektrische, magnetische und/oder optische Fühler ausgebildet. Eine derartige, berührungslose Wechselwirkung ist deutlich weniger schadanfällig als mechanische Fühler. Lichtschranken, Laser-Abstandsmesser, Magnetschalter etc. sind standardmäßig erhältliche Näherungssensoranordnungen, die im Kontext der vorliegenden Erfindung ebenso wie speziell entwickelte oder noch zu entwickelnde Varianten einsetzbar sind.

Alternativ oder zusätzlich zu einer derartigen Näherungssensorik kann vorgesehen sein, dass der jeweilige Zeitpunkt des Passierens jedes Kalibrierpunktes ermittelt wird durch Abgleich von für jeden Kalibrierpunkt in der Steuereinheit hinterlegten Geokoordinaten einerseits und mittels eines am Trägerfahrzeug angeordneten, mit der Steuereinheit datenübertragend verbundenen Geokoordinaten-Empfängers aktuell ermittelten Geokoordinaten andererseits. Dieser Ansatz setzt zur Erzielung eines hinreichend geringen Abstandes der Messorte für die zur Kalibrierung genutzten Bodenfeuchte- und Vibrationsmesswerte freilich eine entsprechende Genauigkeit des genutzten, insbesondere satellitengestützten Geokoordinatensystems voraus.

Bislang war lediglich von der Erstellung der Umrechnungsregel in Schritt d auf Basis der im Rahmen der Kalibrierstrecken-Überfahrt ermittelten Reihe von Bodenfeuchte-Vibrations-Messwertpaaren die Rede. Bei einer Weiterbildung der Erfindung kann jedoch vorgesehen sein, dass beim Erstellen der Umrechnungsregel in Schritt d weitere, von der Bodenfeuchte verschiedene und in der Steuereinheit hinterlegte Bodeneigenschaftswerte der zu bearbeitenden Fläche berücksichtigt werden. Dieser Ansatz geht von der Erkenntnis aus, dass der Zusammenhang zwischen dem Vibrationsverhalten des Bodenbearbeitungselementes und der Bodenfeuchte nicht unter allen Umständen konstant ist. Beispielsweise können maschinenspezifische, bodenphysikalische und biologische Parameter den Zusammenhang zwischen Bodenfeuchte und Vibrationsverhalten des Bodenbearbeitungselementes beeinflussen. Als maschinenspezifische Parameter kommen hier beispielsweise die Art der Bodenbearbeitung (säen, grubbern, pflügen etc.), das verwendete Bodenbearbeitungsgerät (Drillmaschine, Grubber, Pflug etc.), die Arbeitstiefen-Grobeinstellungen, die Arbeitsbreiten-Grobeinstellungen, die Fahrgeschwindigkeits-Grobeinstellungen, die Masse der Zugmaschine, die Masse des Bodenbearbeitungsgerätes und der aktuelle Bodenbearbeitungsgrad der zu bearbeitenden Fläche in Frage. Als bodenphysikalische Parameter kommen beispielsweise die Bodentexturen von Feinböden, die Feinbödenarten, die Bodenpartikelverteilung, besondere Erkennungsmerkmale von Feinböden, wie beispielsweise Bindigkeit, Formbarkeit, Körnigkeit, die Lagerungsdichte, die Bodenkonsistenz, der Verfestigungsgrad des Bodens oder sein Steinbesatz in Frage. Als biologische Parameter kommen beispielsweise die Höhe einer Mulchauflage und ein Biomasseanteil, beispielsweise von Pflanzenresten oder Wurzeln im Boden, in Frage.

All solche Parameter können bei der Erstellung der Umrechnungsregel mit Berücksichtigung finden. Insbesondere ist bei einer besonders bevorzugten Weiterbildung der Erfindung vorgesehen, dass derartige Bodeneigenschaftswerte
- über eine Mensch-Maschine-Schnittstelle der Steuereinheit eingegeben und in der Steuereinheit hinterlegt werden und/oder
- über angepasste Sensoren ermittelt und in der Steuereinheit hinterlegt werden.

Zur Vereinfachung der Eingabe kann von einer entsprechenden Mensch-Maschine-Schnittstelle berücksichtigt werden, dass viele dieser Parameter standortspezifisch und wenig zeitvariabel sind, so dass sie nicht bei jedem Verfahrensdurchlauf komplett neu eingegeben werden müssen, sondern nach einmaliger Eingabe gespeichert bleiben können und ggf. nur auf Nachfrage bestätigt werden müssen.

Denkbar ist, derartige Parameter und Wechselwirkungen mathematisch in Form einer mehrdimensionalen Matrix zusammenzustellen und daraus bereits eine grobe Umrechnungsregel zwischen Vibrationsmesswerten und Bodenfeuchtewerten zu ermitteln, die dann im Rahmen des erfindungsgemäßen Kablibrierverfahrens lediglich noch einem "Feintuning" unterworfen wird.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1:: eine schematisierte Darstellung eines zur Durchführung des erfindungsgemäßen Verfahrens geeigneten Bodenbearbeitungsgerätes sowie
- Figur 2:: eine schematische Darstellung der Durchführung des erfindungsgemäßen Verfahrens.

### Beschreibung bevorzugter Ausführungsformen

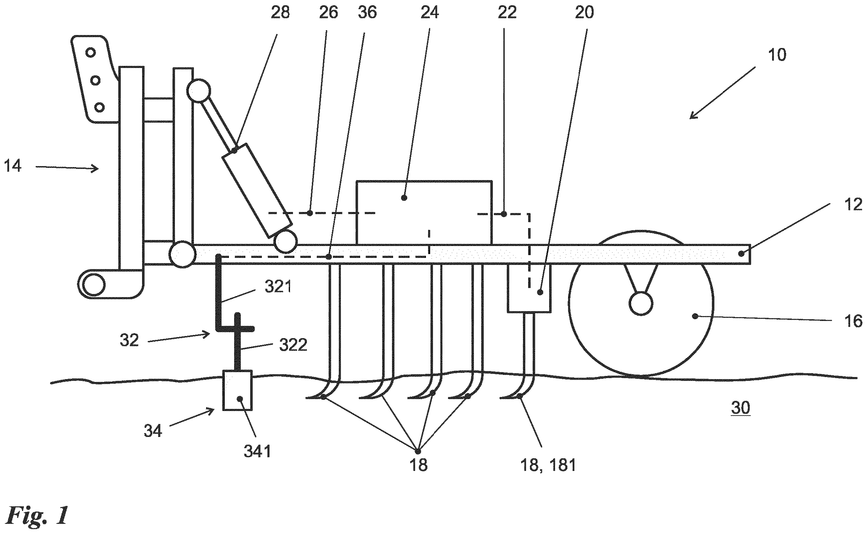

Figur 1 zeigt in stark schematisierter Form ein Bodenbearbeitungsgerät 10, welches grundsätzlich zur Durchführung des erfindungsgemäßen Bodenbearbeitungsverfahrens bzw. des erfindungsgemäßen Kalibrierverfahrens tauglich ist. Das Bodenbearbeitungsgerät 10 umfasst eine Trägerstruktur 12, die in bekannter Weise an einer Dreipunkt-Aufhängung eines Trägerfahrzeugs, insbesondere eines universell einsetzbaren Traktors fixierbar ist und hierzu eine korrespondierende Aufhängung 14 aufweist. An ihrem rückwärtigen Ende weist die Trägerstruktur 12 ein Stützrad 16 auf.

Zwischen diesen beiden Abstützpunkten sind eine Mehrzahl von Bodenbearbeitungselementen 18 fixiert, die hier symbolisch als Zinken ausgebildet sind. Eines dieser Bodenbearbeitungselemente 18, nämlich der in Figur 1 ganz rechts dargestellte Messzinken 181, ist mit einem Vibrationssensor 20 ausgestattet, welcher kontinuierlich oder periodisch die Schwingungsbewegung des Messzinkens 181 zu registrieren in der Lage ist. Während der Bodenbearbeitung durchschneiden die Bodenbearbeitungselemente 18 und insbesondere der Messzinken 181 den zu bearbeitenden Boden 30.

Der Vibrationssensor 20 ist über eine Steuerleitung 22 mit einer Steuereinheit 24 verbunden. Bei der dargestellten Ausführungsform ist die Steuereinheit 24 auf dem Bodenbearbeitungsgerät 10 selbst, insbesondere auf dessen Trägerstruktur 12 angeordnet. Bei anderen Ausführungsformen - und dies wird in der Praxis die Regel sein - ist die Steuereinheit 24 integraler Bestandteil des in Figur 1 nicht dargestellten Trägerfahrzeugs, insbesondere ein Teil dessen Bordcomputers.

Über eine weitere Steuerleitung 26 ist die Steuereinheit 24 mit einem Aktor 28 verbunden, der hier symbolisch als ein Hydraulikkolben dargestellt ist. Der Aktor 28 dient der Verstellung des Bodenbearbeitungsgerätes 10 relativ zum Trägerfahrzeug bzw. zum bearbeiteten Boden 30. Der Fachmann wird verstehen, dass die Darstellung der Steuerleitung 26 rein symbolisch ist; sie dient allein der Darstellung der funktionalen

Kopplung zwischen Steuereinheit 24 und Aktor 28. In der Praxis wird die Steuerleitung 26 regelmäßig zwischen der verfahrensrelevanten Steuereinheit 24 und dem universellen Hydraulik-Steuergerät des Trägerfahrzeugs verlaufen, wobei beide funktionale Einheiten auch in derselben konstruktiven Einheit, insbesondere einem universellen Bordcomputer, verwirklicht sein können. In Bezug auf den Aktor 28 wird der Fachmann verstehen, dass dieser nicht zwingend als besonderer Bestandteil des Bodenbearbeitungsgerätes 10 ausgebildet sein muss, sondern dass hierfür auch ein verstellbarer Anlenkpunkt am Trägerfahrzeug selbst genutzt werden kann, wie beispielsweise eine hydraulisch ansteuerbare Dreipunkt- Aufhängung oder Ackerschiene.

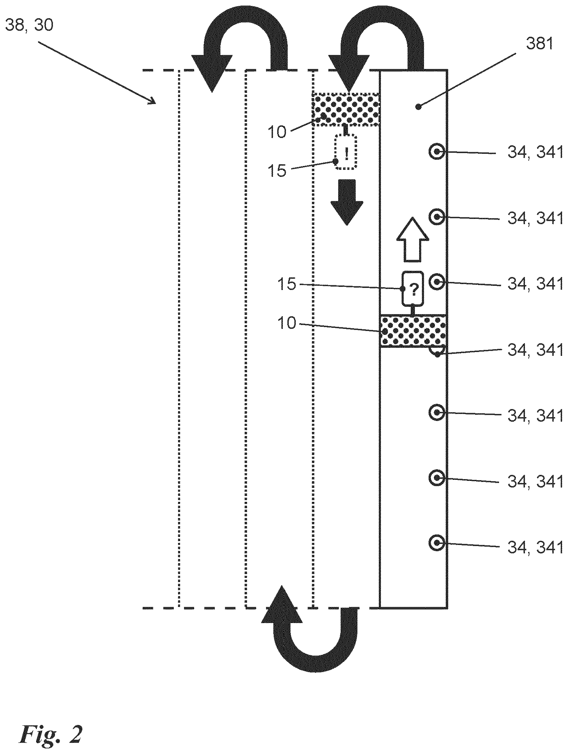

Weiter ist eine Näherungssensoranordnung 32 vorgesehen. Diese umfasst ein geräteinternes Näherungssensorelement 321, welches in der dargestellten Ausführungsform als ein am Bodenbearbeitungsgerät 10 angebrachter, mechanischer Fühler ausgebildet ist. Als weiterer Bestandteil der Näherungssensoranordnung 32 ist ein geräteexternes Näherungssensorelement 322, ebenfalls ausgebildet als mechanischer Fühler, vorgesehen, der genutzt werden kann, um die Position eines Kalibrierpunktes 34 zu markieren. Bei der dargestellten Ausführungsform ist am Kalibrierpunkt 34 ein Bodenfeuchtesensor 341 mit einem aufragenden Markierungsstab, nämlich dem geräteexternen Fühler bzw. Näherungssensorelement 322, positioniert. Bei alternativen Ausführungsformen ist der Kalibrierpunkt 34 nur eine Position im Feld 38 (Fig. 2), an der vorab eine unabhängige Bodenfeuchtemessung durchgeführt wurde und der mit dem geräteexternen Näherungssensorelement 322 markiert wurde. Bei Wechselwirkung der beiden Näherungssensorelemente 321, 322, d.h. im gezeigten Ausführungsbeispiel bei mechanischem Kontakt der beiden Fühler, wird, bspw. über einen elektrischen Schalter, ein Signal erzeugt, welches an die Steuereinheit 24 weitergeleitet wird. Bei der gezeigten Ausführungsform erfolgt dies über die Steuerleitung 36. Bei alternativen Ausführungsformen arbeiten die Näherungssensorelemente 321, 322 berührungslos. In jedem Fall kann der Zeitpunkt einer definierten Annäherung des

Bodenbearbeitungsgerätes 10, insbesondere dessen Messzinkens 181, an den Kalibrierpunkt 34 exakt ermittelt werden. Dies erlaubt es, die zum Zeitpunkt der definierten Annäherung von dem Vibrationssensor 20 aufgenommenen Vibrationsmesswerte mit den Bodenfeuchtemesswerten am Kalibrierpunkt 34 in Beziehung zu setzen. In den besonders bevorzugten Fällen, in denen am Kalibrierpunkt 34 ein kontinuierlich oder periodisch arbeitender Bodenfeuchtesensor 341 platziert ist, können die zeitgleich zum Zeitpunkt der definierten Annäherung aufgenommenen Vibrations- und Bodenfeuchtemesswerte einander zugeordnet werden.

Figur 2 zeigt stark schematisiert den Ablauf des erfindungsgemäßen Bodenbearbeitungsverfahrens in einer Ausführungsform, die auch das erfindungsgemäße Kalibrierverfahren nutzt.

Dargestellt ist ein Ausschnitt eines Feldes 38 mit dem zu bearbeitenden Boden 30. Ein Teilabschnitt des Feldes 38 (ganz rechts in Figur 2), wird als Kalibrierstrecke 381 definiert. Auf der Kalibrierstrecke 381 werden mehrere Kalibrierpunkte 34 festgelegt, an denen bei der bevorzugten Ausführungsform jeweils ein Bodenfeuchtesensor 341 positioniert wird. Im Rahmen der Bodenbearbeitung wird zunächst die Kalibrierstrecke 381 mit dem Bodenbearbeitungsgerät 10, gezogen von dem Trägerfahrzeug 15, bodenbearbeitend überfahren. Bei jedem Passieren eines Kalibrierpunktes 34 wird durch Wechselwirkung der Näherungssensorelemente 321, 322 der Zeitpunkt einer definierten räumlichen Nachbarschaftskonstellation zwischen dem Messzinken 181 und dem Kalibrierpunkt 34 bestimmt. Die Steuereinheit 24 stellt die zu diesem Zeitpunkt vom Vibrationssensor 20 erfassten Vibrationsmesswerte einerseits und die vom Bodenfeuchtesensor 341 erfassten Bodenfeuchtemesswerte andererseits zu einem Bodenfeuchte-Vibrations-Messwertpaar zusammen. Nach Überfahren der gesamten Kalibrierstrecke kann die erfasste Reihe von Bodenfeuchte-Vibrations-Messwertpaaren zu einer zuverlässigen Umrechnungsregel von Vibrationsmesswerten zu Bodenfeuchtewerten erstellt werden. Günstigerweise erfolgt dies unter Berücksichtigung von zusätzlichen Informationen zur Bodenbeschaffenheit, zum Bearbeitungsmodus und zum aktuellen Bewuchs der Kalibrierstrecke 381 bzw. des diesbezüglich von ihr nicht deutlich abweichenden, restlichen Bodens 30 des Feldes 38. Mit der ermittelten Umrechnungsregel kann nachfolgend das gesamte Feld 38 bodenbearbeitend überfahren werden, wobei an jeder Position die vom Vibrationssensor 20 aktuell aufgenommenen Vibrationsmesswerte in Bodenfeuchtewerte umgerechnet werden, sodass der Aktor 28 in Abhängigkeit davon angesteuert werden kann.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere steht die Wahl des speziellen Bodenbearbeitungsgerätes 10 dem Fachmann ebenso frei wie die Wahl der konkreten Abhängigkeit der Ansteuerung des Aktors 28 von den lokal ermittelten Bodenfeuchtewerten. Hier fließt die einzelfallbezogene Landbau-Expertise des Fachmanns ein.

### Bezugszeichenliste

- 10: Bodenbearbeitungsgerät
- 12: Trägerstruktur
- 14: Aufhängung
- 15: Trägerfahrzeug
- 16: Stützrad
- 18: Bodenbearbeitungselement
- 181: Messzinken
- 20: Vibrationssensor
- 22: Steuerleitung
- 24: Steuereinheit
- 26: Steuerleitung
- 28: Aktor
- 30: Boden
- 32: Näherungssensoranordnung
- 321: Näherungssensorelement
- 322: Näherungssensorelement
- 34: Kalibrierpunkt
- 341: Bodenfeuchtesensor
- 36: Steuerleitung
- 38: Feld
- 381: Kalibrierstrecke

## Patentansprüche

1. Verfahren zur Bodenbearbeitung, im Rahmen dessen der Boden (30) einer zu bearbeitenden Fläche mittels eines verstellbar an einem Trägerfahrzeug (15) montierten Bodenbearbeitungsgerätes (10), welches ein den Boden (30) während der Bearbeitung durchschneidendes Bodenbearbeitungselement (18) aufweist, bearbeitet wird,
wobei das Bodenbearbeitungselement (18) schwingungsübertragend mit einem Vibrationssensor (20) gekoppelt ist, welcher Schwingungen des Bodenbearbeitungselementes (18) während der Bearbeitung misst und entsprechende Vibrationsmesswerte an eine Steuereinheit (24) übergibt,
und wobei die Steuereinheit (24) in Abhängigkeit von den Vibrationsmesswerten einen Aktor (28) zur Verstellung des Bodenbearbeitungsgerätes (10) ansteuert,
**dadurch gekennzeichnet,**
**dass** die Ansteuerung des Aktors (28) in lediglich indirekter Abhängigkeit von den Vibrationsmesswerten erfolgt, indem diese zunächst gemäß einer in der Steuereinheit (24) hinterlegten Umrechnungsregel in berechnete Bodenfeuchtewerte umgerechnet werden und die Steuereinheit (24) sodann den Aktor (28) in direkter Abhängigkeit von den berechneten Bodenfeuchtewerten ansteuert.

2. Verfahren nach Anspruch 1,
**dadurch gekennzeichnet,**
**dass** die Umrechnungsregel mittels eines Kalibrierverfahrens erstellt wird, welches die folgenden Schritte umfasst:
a) Auswählen eines Teilbereichs der zu bearbeitenden Fläche als Kalibrierstrecke (381),
b) Ermitteln einer Mehrzahl von Bodenfeuchtemesswerten als Kalibriermesswerte an vorbestimmten Kalibrierpunkten (34) der Kalibrierstrecke (381),
c) bodenbearbeitendes Überfahren der Kalibrierstrecke (381) mit dem Trägerfahrzeug (15), wobei das Bodenbearbeitungselement (18) den Boden (30) durchschneidet und der Vibrationssensor (20) Schwingungen des Bodenbearbeitungselementes (18) misst und entsprechende Vibrationsmesswerte ermittelt
und wobei bei jedem Passieren eines der Kalibrierpunkte (34) der zugeordnete Kalibriermesswert dem jeweils aktuellen Vibrationsmesswert zur Bildung eines Bodenfeuchte-Vibrations-Messwertpaares zugeordnet wird,
d) Berechnen, auf Basis der Bodenfeuchte-Vibrations-Messwertpaare, einer Regel zur Umrechnung von Vibrationsmesswerten in berechnete Bodenfeuchtewerte und Hinterlegen der berechneten Regel als besagte Umrechnungsregel in der Steuereinheit (24).

3. Verfahren zum Kalibrieren einer vibroakustischen Bodenfeuchte-Messvorrichtung, welche
- eine angeordnete Steuereinheit (24),
- einen Vibrationssensor (20) und
- ein schwingungsübertragend mit dem Vibrationssensor (20) gekoppeltes Bodenbearbeitungselement (18) eines verstellbar an einem Trägerfahrzeug (15) montierten Bodenbearbeitungsgerätes (10)
aufweist,
umfassend die Schritte:
a) Auswählen eines Teilbereichs einer zu bearbeitenden Fläche als Kalibrierstrecke (381),
b) Ermitteln einer Mehrzahl von Bodenfeuchtemesswerten als Kalibriermesswerte an vorbestimmten Kalibrierpunkten (34) der Kalibrierstrecke (381),
c) bodenbearbeitendes Überfahren der Kalibrierstrecke (381) mit dem Trägerfahrzeug (15), wobei das Bodenbearbeitungselement (18) den Boden (30) durchschneidet und der Vibrationssensor (20) Schwingungen des Bodenbearbeitungselementes (18) misst und entsprechende Vibrationsmesswerte ermittelt
und wobei bei jedem Passieren eines der Kalibrierpunkte (34) der zugeordnete Kalibriermesswert dem jeweils aktuellen Vibrationsmesswert zur Bildung eines Bodenfeuchte-Vibrations-Messwertpaares zugeordnet wird, d) Berechnen, auf Basis der Bodenfeuchte-Vibrations-Messwertpaare, einer Regel zur Umrechnung von Vibrationsmesswerten in berechnete Bodenfeuchtewerte und Hinterlegen der berechneten Regel als Umrechnungsregel in der Steuereinheit (24).

4. Verfahren nach Anspruch 3,
**dadurch gekennzeichnet,**
**dass** Schritt b vor Schritt c durchgeführt und die in Schritt b ermittelten Kalibriermesswerte bis zur Durchführung von Schritt c gespeichert werden.

5. Verfahren nach Anspruch 4,
**dadurch gekennzeichnet,**
**dass** jeder Kalibriermesswert in einem Datenspeicher am zugeordneten Kalibrierpunkt (34) gespeichert und zum Zeitpunkt des Passierens des jeweiligen Kalibrierpunktes (34) drahtlos an die Steuereinheit (24) kommuniziert wird.

6. Verfahren nach Anspruch 3,
**dadurch gekennzeichnet,**
**dass** die Schritte b und c gleichzeitig durchgeführt werden,
wobei jeder zum Zeitpunkt des Passierens eines der Kalibrierpunkte (34) dort ermittelte Kalibriermesswert drahtlos an die Steuereinheit (24) kommuniziert wird.

7. Verfahren nach einem der Ansprüche 5 bis 6,
**dadurch gekennzeichnet,**
**dass** der jeweilige Zeitpunkt des Passierens der Kalibrierpunkte (34) durch Wechselwirkung eines am Trägerfahrzeug (15) vorhandenen ersten Näherungssensorelementes (321) einer Näherungssensoranordnung (32) mit an den Kalibrierpunkten (34) vorhandenen zweiten Näherungssensorelementen (322) derselben Näherungssensoranordnung (32) ermittelt wird.

8. Verfahren nach Anspruch 7,
**dadurch gekennzeichnet,**
**dass** die Näherungssensorelemente (321, 322) als mechanisch miteinander wechselwirkende, mechanische Fühler ausgebildet sind.

9. Verfahren nach Anspruch 7,
**dadurch gekennzeichnet,**
**dass** die Näherungssensorelemente als berührungslos, insbesondere elektrisch, magnetisch und/oder optisch, miteinander wechselwirkende Fühler, insbesondere elektrische, magnetische und/oder optische Fühler, ausgebildet sind.

10. Verfahren nach einem der Ansprüche 5 bis 6,
**dadurch gekennzeichnet,**
**dass** der jeweilige Zeitpunkt des Passierens jedes Kalibrierpunktes ermittelt wird durch Abgleich von für jeden Kalibrierpunkt in der Steuereinheit hinterlegten Geokoordinaten einerseits und mittels eines am Trägerfahrzeug angeordneten, mit der Steuereinheit datenübertragend verbundenen Geokoordinaten-Empfängers aktuell ermittelter Geokoordinaten andererseits.

11. Verfahren nach einem der vorangehenden Ansprüche,
**dadurch gekennzeichnet,**
**dass** beim Erstellen der Umrechnungsregel in Schritt d weitere, von der Bodenfeuchte verschiedene und in der Steuereinheit (24) hinterlegte Bodeneigenschaftswerte der zu bearbeitenden Fläche berücksichtigt werden.

12. Verfahren nach Anspruch 11,
**dadurch gekennzeichnet,**
**dass** die weiteren Bodeneigenschaftswerte
- über eine Mensch-Maschine-Schnittstelle der Steuereinheit (24) eingegeben und in der Steuereinheit (24) hinterlegt werden und/oder
- über angepasste Sensoren ermittelt und in der Steuereinheit (24) hinterlegt werden.
